# EUROPEAN PATENT SPECIFICATION

(11) **EP 2 849 253 B1**
(45) Date of publication and mention of the grant of the patent: **28.09.2016**
(21) Application number: 14182348.4
(22) Date of filing: 26.08.2014
(51) Int. Cl.: H01M 2/10, F16B 5/06, F16B 5/07

(54) **Battery pack**
Batteriepack
Bloc-batteries

(30) Priority: 13.09.2013 KR 20130110617
(43) Date of publication of application: 18.03.2015
(73) Proprietor: Samsung SDI Co., Ltd., Yongin-si, Gyeonggi-do (KR)
(72) Inventor: Jeong, Ik-Jae, Gyeonggi-do (KR); Bae, Min-Cheol, Gyeonggi-do (KR); Noh, Kyoung-Hwan, Gyeonggi-do (KR); Choi, Hong-Keun, Gyeonggi-do (KR)
(74) Representative: Walaski, Jan Filip

(56) References cited:
- EP-A1- 0 761 984
- WO-A1-90/08452
- JP-A- 2008 140 730
- US-A1- 2011 159 336
- US-A1- 2011 159 348
- US-A1- 2011 294 000
- US-A1- 2013 081 846
- US-A1- 2013 224 547

## Description

The described technology generally relates to a battery pack.

In contrast to primary batteries, secondary batteries are rechargeable. Secondary, or rechargeable, batteries are widely used as energy sources in devices such as mobile electronic devices, electric vehicles, hybrid electric vehicles, electric bicycles, and uninterruptible power supplies. Either single-cell secondary batteries or multi-cell secondary batteries (secondary battery packs) in which a number of cells are connected can be used based on the external devices using the secondary batteries.
Small mobile devices such as cellular phones may be operated for a limited period of time using single-cell secondary batteries. However, battery packs having a high-output and high-capacity are more suitable for devices having long operating times and consuming large amount of power such as electric vehicles or hybrid electric vehicles. Such battery packs have coupling housings for holding in place an arrangement of battery cells.

US2011/159348, US2013/224547, US2011/159336, US2011/294000, and JP 2008 140730 relate to cases for a plurality of battery packs. WO90/08452 relates to a hook mechanism for coupling sides of a housing. US2013/081846 relates to a housing for an electronic device. EP0761984 relates to a tongue and groove fastening.

One inventive aspect is a battery pack having an improved coupling structure for easily assembling two or more battery cells as a module and substantially guaranteeing sufficient coupling strength.

According to an aspect of the present invention, there is provided a battery pack according to claim 1. Optional features are set out in the dependent claims.

Another aspect is a battery pack including a plurality of battery cells, a case frame having an opened end to receive the battery cells, and a finishing plate configured to be coupled to the opened end of the case frame, wherein the case frame includes a pair of side plates extending in an arrangement direction of the battery cells and an end plate disposed between the side plates to form a closed end opposite to the opened end, wherein the side plates and the end plate are formed in one piece.

The side plates and the end plate may be connected without joints therebetween.

The side plates and the finishing plate form a hook coupling structure and the hook coupling structure includes a fastening hole and a catch jaw fastenable to the fastening hole.

A protection layer may be formed of a material different from that of the catch jaw may be formed on the catch jaw.

The catch jaw is formed on the finishing plate and the fastening hole is formed in an end part of the side plates to receive the catch jaw.

The finishing plate includes a first coupling tab protruding toward the side plates and the catch jaw is formed on the first coupling tab.

The finishing plate further includes a second coupling tab formed at a position different from that of the first coupling tab and protruding toward the side plates and the first and second coupling tabs are fitted on opposing surfaces of the side plates. The first coupling tab may be fitted on an inner surface of the side plates and the second coupling tab may be fitted on an outer surface of the side plates.

A tapered portion may be formed on an end part of at least one of the first and second coupling tabs for facilitating coupling of the finishing plate to the side plates. The side plates may include a guide tab extending toward the second coupling tab for guiding the assembly of the second coupling tab.

The first and second coupling tabs may extend substantially parallel to each other in an assembling direction of the finishing plate. The first and second coupling tabs may be formed at alternating positions along an edge of the finishing plate.

A leading end of the second coupling tab extends further from the finishing plate than a peak position of the catch jaw.

A position alignment structure may be formed on the finishing plate and the side plates for aligning the finishing plate and the side plates with each other.

The position alignment structure may include an alignment slot and an alignment pin insertable into the alignment slot.

The alignment slot may extend in an assembling direction of the finishing plate.

The finishing plate includes first and second coupling tabs formed at different positions and protruding toward the side plates so as to be fitted on opposing surfaces of the side plates, the side plates may include a guide tab protruding toward the second coupling tab to guide assembly of the second coupling tab, the alignment slot may be formed in the second coupling tab, and the alignment pin may be formed at a position of the side plates that is aligned with the guide tab in an assembling direction of the guide tab or the finishing plate.

A catch jaw is formed on the first coupling tab for hook coupling between the finishing plate and the side plates.

Another aspect is a battery pack including a plurality of battery cells, a case frame housing the battery cells and including a pair of side plates forming an open end in the case frame, wherein each of the side plates has one of i) a hole and ii) a hook configured to be inserted into the hole adjacent to the opened end, and a finishing plate having the other of the hole and the hook and configured to be connected to the side plates.

The finishing plate may further include a first coupling tab protruding towards the side plates and wherein the hook is formed on the first coupling tab. Each of the side plates includes opposing surfaces, wherein the finishing plate further includes a second coupling tab formed at a different position from that of the first coupling tab and protruding toward the side plates, and wherein the first and second coupling tabs are configured to be respectively fitted on the opposing surfaces of the side plates. Each of the side plates includes a guide tab extending toward the second coupling tab.

Embodiments of the invention will now be described by way of example with reference to the accompanying drawings, in which:
FIG. 1 is an exploded perspective view illustrating a battery pack according to an embodiment.
FIG. 2 is a perspective view illustrating the arrangement of the battery cells depicted in FIG. 1.
FIGS. 3 and 4 are perspective views illustrating a potion of FIG. 1 to illustrate the assembly of a finishing plate and a case frame.
FIG. 5 is an enlarged perspective view illustrating assembling portions of the finishing plate and the case frame.
FIG. 6 is an enlarged perspective view illustrating the finishing plate.

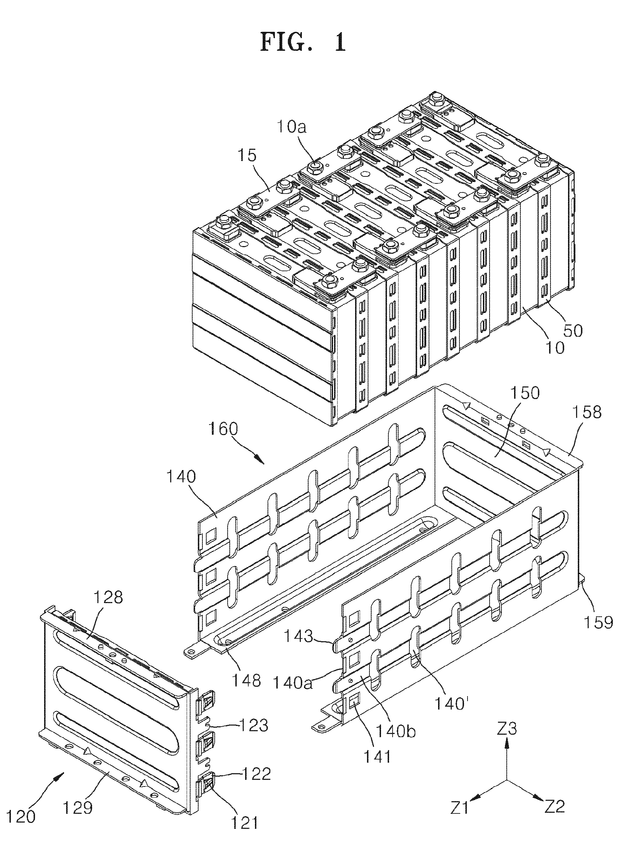

Referring to FIG. 1, the battery pack includes a plurality of battery cells 10 arranged (or stacked) in an arrangement direction Z1. The battery pack also includes finish, side, and end plates 120, 140, and 150 surrounding the battery cells 10.

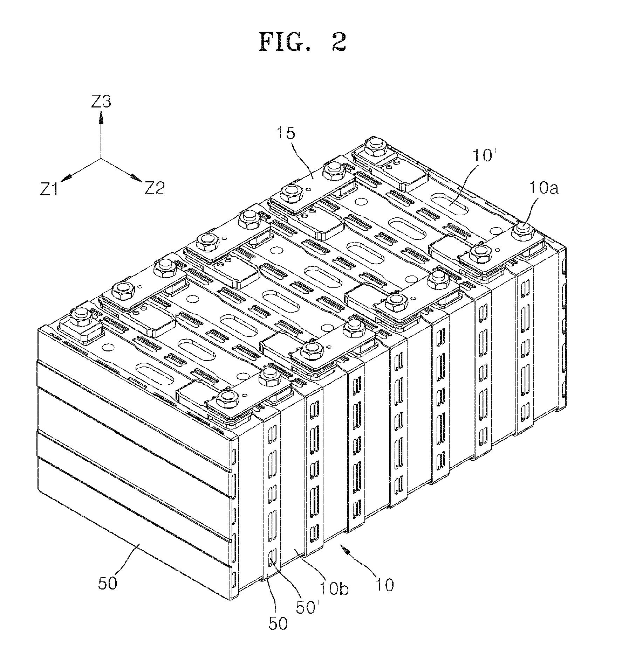

FIG. 2 is a perspective view illustrating the battery cells 10 depicted in FIG. 1. Referring to FIGS. 1 and 2, the battery cells 10 may be secondary battery cells such as lithium ion battery cells. The battery cells 10 may have any shape such as a cylindrical or prismatic shape. In addition, the battery cells 10 may be any type of battery cells such as polymer battery cells. That is, the battery cells 10 are not limited to any shape or type of battery cell.

In some embodiments, each of the battery cells 10 include a case 10b, an electrode assembly (not shown) disposed in the case 10b, and electrode terminals 10a electrically connected to the electrode assembly and exposed to the exterior of the case 10b. In these cases, the electrode terminals 10a exposed to the exterior of the case 10b form portions from the topside of the case 10b. Although not shown, the electrode assembly may include a positive electrode, a separator, and a negative electrode. The electrode assembly may be a jelly-roll or stack type electrode assembly. The case 10b accommodates the electrode assembly and the electrode terminals 10a are exposed to the exterior of the case 10b for electric connection with an external circuit.

According to some embodiments, neighboring battery cells 10 are electrically connected to each other by connecting electrode terminals 10a of the neighboring battery cells 10. In these cases, neighboring battery cells 10 are electrically connected to each other in series, in parallel, or in a combination thereof by connecting electrode terminals 10a of the neighboring battery cells 10.

A safety vent 10' may be formed in the case 10b. The safety vent 10' is relatively weak so that if the pressure inside of the case 10b increases to a critical level or higher, the safety vent 10' may be fractured to release gas from the inside of the case 10b.

Spacers 50 may be disposed between neighboring battery cells 10. The spacers 50 may electrically insulate the neighboring battery cells 10 from each other. For example, the cases 10b of the battery cells 10 may be charged and the spacers 50 formed of an electrical insulation material and disposed between the cases 10b may prevent electrical interference between neighboring pairs of the battery cells 10.

In addition, the spacers 50 may function as heat-dissipating paths between the battery cells 10. To this end, heat-dissipating holes 50' may be formed in the spacers 50. Heat-dissipating holes 140' (refer to FIG. 1) may be formed in the side plates 140 which substantially cover sides of the spacers 50 as described later and the heat-dissipating holes 140' of the side plates 140 may be aligned with the heat-dissipating holes 50' of the spacers 50 to form heat-dissipating paths between the battery cells 10.

The spacers 50 may be disposed between the battery cells 10 and substantially prevent thermal expansion (swelling) of the battery cells 10. The cases 10b of the battery cells 10 are formed of a deformable material such as metal. Thus, the spacers 50 may be formed of a less deformable material such as polymer to substantially suppress swelling the battery cells 10.

The spacers 50 may be disposed on outermost sides of the battery cells 10 in the arrangement direction Z1 as well as between the battery cells 10. In detail, referring to FIG. 1, an end plate 150 and a finishing plate 120 are disposed on both ends of the battery cells 10 in the arrangement direction Z1. A spacer 50 is disposed between the end plate 150 and the corresponding outermost battery cell 10 and another spacer 50 is disposed between the finishing plate 120 and the corresponding outermost battery cell 10, so as to electrically insulate the end and finishing plates 150 and 120 from the outermost battery cells 10.

Referring to FIG. 1, the battery pack further includes a module case (120 and 160) in which the battery cells 10 are arranged and bound in the arrangement direction Z1.

The module case (120 and 160) includes a case frame 160 having an opened end to receive and house the battery cells 10 and the finishing plate 120 configured to be coupled to the opened end of the case frame 160 for closing the opened end.

The case frame 160 substantially covers three sides of the battery cell array (10, 50) disposed in the arrangement direction Z1. The battery cell array (10, 50) may include the battery cells 10 and the spacers 50 arranged in the arrangement direction Z1. In some embodiments, the case frame 160 includes a pair of side plates 140 extending in the arrangement direction Z1 to substantially cover both sides of the battery cell array (10, 50) and the end plate 150 disposed between the side plates 140 to substantially cover an end of the battery cell array (10, 50). The side plates 140 and the end plate 150 may be formed together in one piece. In these cases, the side plates 140 are smoothly connected to the end plate 150 without any joints therebetween. For example, the case frame 160 may be formed by bending a raw material sheet without using any fasteners. Thus, additional fasteners such as bolts and nuts are not required to couple the side plates 140 and the end plate 150.

Alternatively, the side plates 140 and the end plate 150 may be coupled by a method such as welding without using any fasteners. In the current embodiment, the side plates 140 and the end plate 150 are formed of a raw material sheet. That is, the side plates 140 and the end plate 150 are smoothly connected without any welding points or joints therebetween.

The finishing plate 120 is coupled to the opened end of the case frame 160. In some embodiments, the battery cell array (10, 50) is inserted into the case frame 160 through the opened end of the case frame 160. Then, the opened end of the case frame 160 is closed by coupling the finishing plate 120 to the opened end. Next, the case frame 160 and the finishing plate 120 are fastened to each other by a mechanical fastening method. In some embodiments, the finishing plate 120 is slid into the opened end of the case frame 160 in an assembling direction and locked thereto by a hook coupling structure so that the finishing plate 120 is substantially prevented from being separated from the case frame 160 without a releasing action.

The finishing and end plates 120 and 150 may be disposed on opposing ends of the battery cell array (10, 50). The finishing and end plates 120 and 150 may include flanges 128, 129, 158, and 159 extending in directions away from the battery cell array (10, 50). The flanges 128, 129, 58, and 159 are bent from edge portions of the finishing and end plates 120 and 150 away from the battery cell array (10, 50). The flanges 128, 129, 158, and 159 may include upper flanges 128 and 158 and lower flanges 129 and 159 respectively formed on upper and lower sides of the finishing and end plates 120 and 150. The flanges 128, 129, 158, and 159 may function as coupling positions at which neighboring elements are coupled to the finishing plate 120 and the end plate 150. Fastening holes may be formed in the flanges 128, 129, 158, and 159 and screws may be inserted into the fastening holes. In some embodiments, a cover member (not shown) is disposed on top of the battery cell array (10, 50) and coupled to the finishing and end plates 120 and 150 through the fastening holes formed in the flanges 128, 129, 158, and 159. The flanges 128, 129, 158, and 159 may enhance the mechanical strength of the finishing and end plates 120 and 150.

The side plates 140 may be disposed on both lateral sides of the battery cells 10. In other words, the side plates 140 substantially cover both sides of the battery cells 10 arranged in the arrangement direction Z1. The side plates 140 may be provided as a pair of plates on opposing lateral sides of the battery cells 10. The side plates 140 may extend in the arrangement direction Z1 of the battery cells 10 and may be coupled to the finishing plate 120 disposed on an end of the battery cells 10.

The side plates 140 have a substantially plate shape. The side plates 140 include catch jaws (or hooks) 148 bent toward the battery cells 10 to support portions of the bottom sides of the battery cells 10. As shown in FIG. 1, the pair of side plates 140 are disposed on opposing lateral sides of the battery cells 10 and the catch jaws 148 are bent from the side plates 140 to face each other and support the bottom sides of the battery cells 10.

The catch jaws 148 may extend along the entire length of the side plates 140 in the arrangement direction Z1 of the battery cells 10 and ends of the catch jaws 148 may be coupled to the lower flange 129 of the finishing plate 150 using screws. To this end, coupling holes may be formed in the catch jaws 148 and the lower flanges 129. For example, the side plates 140 and the finishing plate 120 may be coupled by aligning the coupling holes of the catch jaws 148 and the lower flange 129 and inserting fasteners into the coupling holes and tightening the fasteners.

The heat-dissipating holes 140' may be formed in the side plates 140. For example, the heat-dissipating holes 140' of the side plates 140 may form patterns. Air may flow to the battery cells 10 through the heat-dissipating holes 140', and thus, heat may be rapidly dissipated from the battery cells 10 during operation of the battery cells 10.

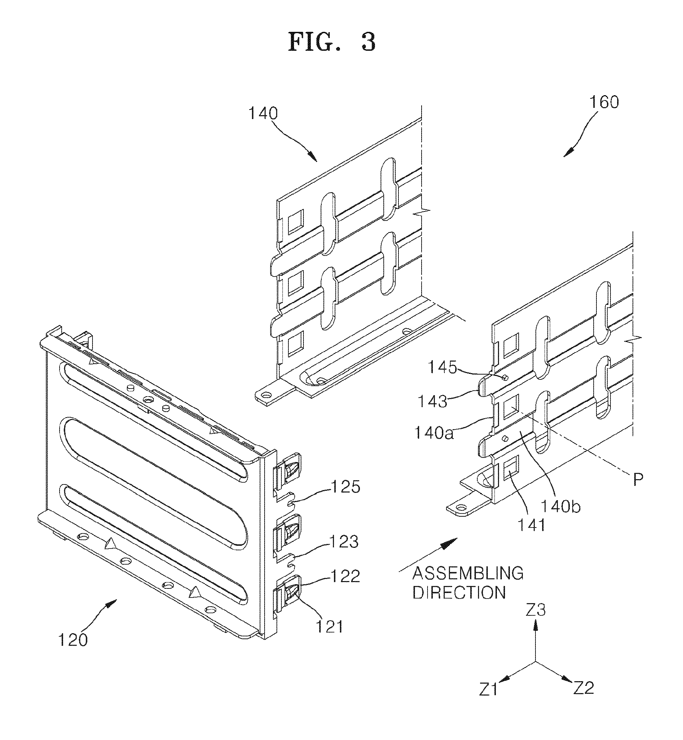

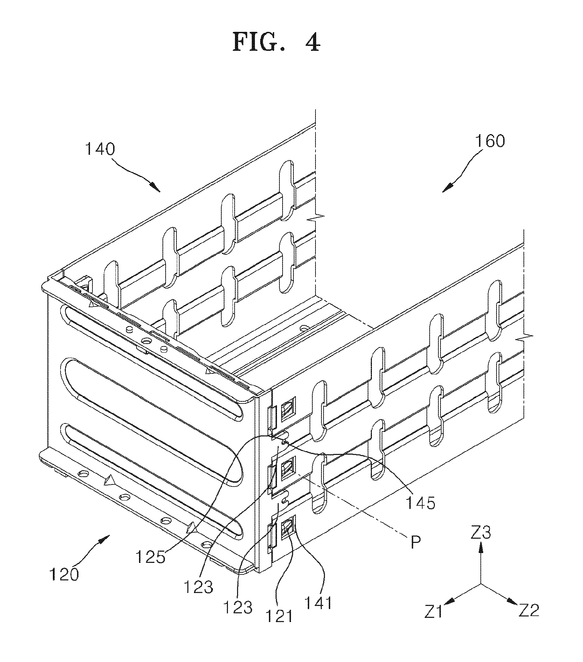

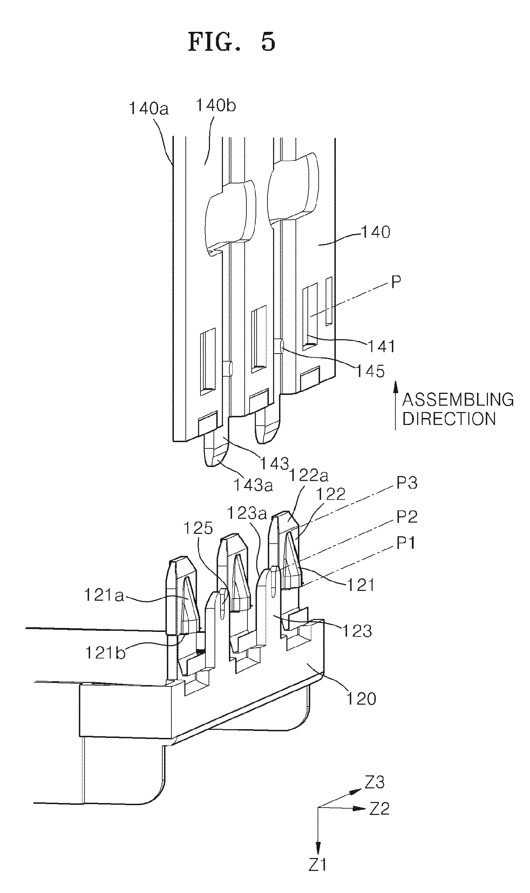

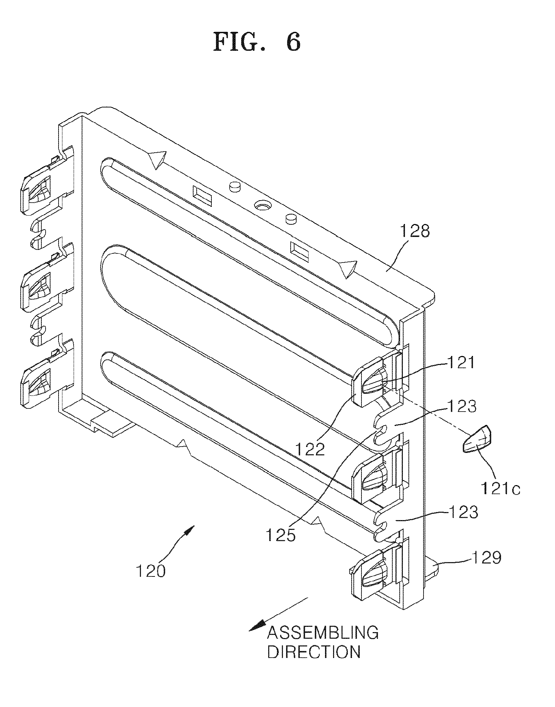

FIGS. 3 and 4 are perspective views illustrating a potion of FIG. 1 to illustrate the assembling of the finishing plate 120 and the case frame 160. FIG. 5 is an enlarged perspective view illustrating assembling portions of the finishing plate 120 and the case frame 160. FIG. 6 is an enlarged perspective view illustrating the finishing plate 120.

Referring to FIGS. 3 and 4, the case frame 160 and the finishing plate 120 may be coupled by a hook coupling structure. In this case, the finishing plate 120 is slid in an assembling direction into an end of the case frame 160 to an assembling position P. Once at the assembling position P, catch jaws 121 of the finishing plate 120 are inserted in fastening holes 141 so that the position of the finishing plate 120 is fixed in the end of the case frame 160. Thus, the catch jaws 121 are hook coupled to the fastening holes 141.

According to some embodiments, the catch jaws 121 are provided in the side plates 140 and the fastening holes are provided in the finishing plate 120. In these cases, the finishing plate 120 is slid an assembling direction into an end of the case frame 160 to an assembling position P. Once at the assembling position P, catch jaws 121 of the side plates 140 are inserted in fastening holes 141 so that the position of the finishing plate 120 is fixed in the end of the case frame 160. Thus, the catch jaws 121 are hook coupled to the fastening holes 141.

Referring to FIG. 5, the catch jaws 121 of the finishing plate 120 are formed on first coupling tabs 122 protruding from the finishing plate 120 in the assembling direction. Each of the catch jaws 121 include a first surface 121a sloped in a first direction and a second surface 121b steeply sloped in a second direction different from the first direction. Thus, the catch jaws 121 may be subject to low resistance when being inserted in the fastening holes 141 in the assembling direction but may be subject to high resistance when being pulled out of the fastening holes 141 in the opposite direction, that is, a separation direction.

In other words, the catch jaws 121 are easily inserted into the fastening holes 141 in the assembling direction of the finishing plate 120 so that the catch jaws 121 are hook coupled to the fastening holes 141. The hook coupling between the catch jaws 121 and the fastening holes 141 is not easily released in the opposite direction, that is, in the separation direction.

The finishing plate 120 may further include second coupling tabs 123 formed at different positions and protruding toward the side plates 140. For example, the first and second coupling tabs 122 and 123 may extend substantially parallel to each other in the assembling direction of the finishing plate 120. In some embodiments, the first and second coupling tabs 122 and 123 are staggered along sides of the finishing plate 120. In these cases, the first and second coupling tabs 122 and 123 are alternately arranged along lateral sides of the finishing plate 120. In some embodiments, the second coupling tabs 123 are formed between the first coupling tabs 122. For example, the first coupling tabs 122 may be formed at three points approximately equally-spaced on each lateral side of the finishing plate 120 and the second coupling tabs 123 may be formed between the first coupling tabs 122.

The first and second coupling tabs 122 and 123 may substantially prevent free releasing of the hook coupling. The first and second coupling tabs 122 and 123 may protrude from the finishing plate 120 in the assembling direction of the finishing plate 120 and may fit on opposite surfaces of each of the side plates 140.

The first coupling tabs 122 may fit on inner surfaces 140a of the side plates 140 and the second coupling tabs 123 may fit on outer surfaces 140b of the side plates 140. Since the first and second coupling tabs 122 and 123 are fitted in a staggered manner on the inner and outer surfaces 140a and 140b of the side plates 140, the first and second coupling tabs 122 and 123 may be in tight contact with the inner and outer surfaces 140a and 140b. At this time, the catch jaws 121 of the first coupling tabs 122 are pushed into the fastening holes 141 of the side plates 140, and thus, the catch jaws 121 are hook coupled to the fastening holes 141 and may not be freely released. The first and second coupling tabs 122 and 123 fitted on the side plates 140 may enhance the hook coupling due to the staggered fit therebetween.

In some embodiments, the case frame 160 is formed by bending a sheet of a raw material to form the pair of side plates 140 and the end plate 150. At this time, the pair of side plates 140 bent from the end plate 150 may be deformed away from each other by a spring-back phenomenon, and as a result, the catch jaws 121 of the finishing plate 120 inserted in the fastening holes 141 of the side plates 140 may be easily separated from the fastening holes 141. However, the first and second coupling tabs 122 and 123 fitted on the side plates 140 in a staggered manner on the inner and outer surfaces 140a and 140b may substantially suppress the spring-back phenomenon of the side plates 140, and thus, the catch jaws 121 formed on the first coupling tabs 122 may be pushed into the fastening holes 141 of the side plates 140.

The first and second coupling tabs 122 and 123 protrude from the finishing plate 120 and fit on the inner and the outer surfaces 140a and 140b of the side plates 140. The first coupling tabs 122 are fastened to the fastening holes 141 of the side plates 140 through the catch jaws 121. The second coupling tabs 123 may be guided to assembling positions of the side plates 140 by guide tabs 143 protruding from the side plates 140. The guide tabs 143 may protrude from the side plates 140 toward the second coupling tabs 123 to guide the second coupling tabs 123 to their assembled positions.

In some embodiments, when the first and second coupling tabs 122 and 123 are assembled, the first coupling tabs 122 move along inner sides 140a of the side plates 140 and the second coupling tabs 123 move along outer sides 140b of the side plates 140. Consequently, the first and second coupling tabs 122 and 123 and the guide tabs 143 may be elastically deformed.

Since the first and second coupling tabs 122 and 123 are moved inward along opposite surfaces of the side plates 140, a large frictional force may be applied to the first and second coupling tabs 122 and 123 when the first and second coupling tabs 122 and 123 move along the side plates 140. For example, since the first and second coupling tabs 122 and 123 tightly contact the inner and outer surfaces 140a and 140b of the side plates 140, contact portions thereof may be mechanically damaged during frictional resistance. Tapered portions 122a may be formed on end portions of the first coupling tabs 122 to reduce such frictional resistance. Tapered portions 123a may also be formed on end portions of the second coupling tabs 123. In this case, the tapered portions 122a and 123a of the first and second coupling tabs 122 and 123 have opposite shapes so as to be easily moved inward on the inner and outer surfaces 140a and 140b of the side plates 140. In addition, tapered portions 143a may also be formed on end portions of the guide tabs 143 facing the second coupling tabs 123 and configured to slide and fit on the second coupling tabs 123. For example, the tapered portions 143a and 123a of the guide tabs 143 and the second coupling tabs 123 may have complementary shapes so that the guide tabs 143 and the second coupling tabs 123 may be easily coupled to each other through a sliding motion.

As described above, each of the catch jaws 121 include the first surface 121a gradually sloped in the first direction and the second surface 121b steeply sloped in the second direction. The expression "steeply sloped" means that the catch jaws 121 have surfaces substantially perpendicular to the first coupling tabs 122.

The first and second surfaces 121a and 121b meet each other at peak positions P1 of the catch jaws 121. When the finishing plate 120 is assembled in the ends of the side plates 140, the first surfaces 121a of the catch jaws 121 are inserted into the fastening holes 141 in an assembling direction and the peak positions P1 of the catch jaws 121 reach assembled positions P. Then, the second surfaces 121b of the catch jaws 121 are caught in the fastening holes 141 to form stable coupling. Before the peak positions P1 of the catch jaws 121 reach assembling positions P, the first coupling tabs 122 may be moved inward on the inner surfaces 140a of the side plates 140 and the second coupling tabs 123 may be pulled inward on the outer surfaces 140b of the side plates 140 due to the deviations of the first coupling tabs 122.

To substantially prevent the above deviation in the second coupling tabs 123, the relative positions of the catch jaws 121 and the second coupling tabs 123 may be set in a manner such that end positions P2 of the second coupling tabs 123 protrude further than the peak positions P1 of the catch jaws 121 in the assembling direction of the finishing plate 120. Then, before the peak positions P1 of the catch jaws 121 reach the assembling position P, the second coupling tabs 123 may reach the outer surfaces 140b of the side plates 140. For example, the end positions P2 of the second coupling tabs 123 may be between start positions P3 and peak positions P1 of the catch jaws 121 in the assembling direction of the finishing plate 120.

While making tight contact with the inner surfaces 140a of the side plates 140, the catch jaws 121 of the first coupling tabs 122 slide past the inner surfaces 140a of the side plates 140 until reaching the fastening holes 141. At this time, the catch jaws 121 may be worn due to frictional interference with the side plates 140. Protection layers 121C (refer to FIG. 6) may be formed on the catch jaws 121 to prevent such friction and wear. For example, the protection layers 121C may include a material different from the material of the catch jaws 121. The protection layers 121C may include coating layers formed on the catch jaws 121 or covers detachably attached to the catch jaws 121. In some embodiments, the protection layers 121C may be formed of stainless steal (SUS).

As shown in FIGS. 3 and 4, a position alignment structure is provided on each of the finishing and side plates 120 and 140 for aligning the finishing and side plates 120 and 140 with each other. Alignment slots 125 are formed in the second coupling tabs 123 and alignment pins 145 insertable into the alignment slots 125 are formed on the side plates 140. In the present embodiment, the alignment pins 145 are formed to be aligned with the guide tabs 143 in a direction substantially parallel to the assembling direction so as to be inserted into the alignment slots 125.

In some embodiments, when the finishing plate 120 is assembled, the alignment slots 125 of the finishing plate 120 and the alignment pins 145 of the side plates 140 are fitted together. In these cases, the alignment slots 125 are elongated in the assembling direction of the finishing plate 120. Assembling of the alignment slots 125 and the alignment pins 145 may improve alignment of the case frame 160 and the finishing plate 120. For example, relative vertical movements of the case frame 160 and the finishing plate 120 may be limited.

As described above, according to at least one embodiment, the case frame having an opened end is coupled with the finishing plate using a hook coupling structure to close the opened end and a plurality of battery cells are packaged as a module using the hook coupling between the case frame and the finishing plate.

According to at least one embodiment, the first and second coupling tabs protrude from different positions of the finishing plate to enhance the hook coupling structure and are fitted on opposite surfaces of the case frame by an interference fitting method so that the catch jaws engaged in the hook coupling may be securely held in the fastening holes in a tight contact state and may not be freely separated from the fastening holes.

Furthermore, according to at least one embodiment, the position alignment structure is provided on the finishing plate and the case frame for aligning the finishing plate and the case frame. Therefore, the finishing plate and the case frame may be easily aligned with each other and thus may be easily fastened to each other.

It should be understood that the exemplary embodiments described herein should be considered in a descriptive sense only and not for purposes of limitation. Descriptions of features or aspects within each embodiment should typically be considered as available for other similar features or aspects in other embodiments.

While one or more embodiments of the described technology have been described with reference to the figures, it will be understood by those of ordinary skill in the art that various changes in form and details may be made therein without departing from the scope of the present invention as defined by the following claims.

## Claims

1. A battery pack, comprising:
a plurality of battery cells (10) arranged in a first direction;
a case frame (160) including an open end and configured to receive the battery cells, wherein the case frame comprises a pair of elongate side plates (140) spaced apart and extending in the first direction, each of the side plates comprising opposing surfaces, and an end plate (150) connected to first ends of the side plates to form a closed end opposite the open end, wherein the side plates and the end plate are formed in one piece; and
a finishing plate (120) connected to second ends of the side plates opposite the first ends,
**characterised in that**
a hook (121) is formed on a first coupling tab (122) protruding from the finishing plate toward the side plates, and
wherein a hole (141) is formed in the side plates adjacent to the open end, the hook comprising first and second surfaces (121a, 121b) which meet at a peak position and being configured to be inserted into the hole,
the finishing plate further comprising a second coupling tab (123) comprising a leading end, formed at a different position from that of the first coupling tab and protruding toward the side plates, and wherein the first and second coupling tabs are configured to be respectively fitted on the opposing surfaces of the side plates, and
wherein the leading end extends farther from the finishing plate than the peak position of the hook.

2. The battery pack of claim 1, wherein the side plates and the end plate are formed by bending a single sheet of material.

3. The battery pack of claim 1, further comprising a protection layer (121C) formed on the hook, wherein the protection layer is formed of a material different from that of the hook.

4. The battery pack of any one of the preceding claims, wherein the opposing surfaces of the side plates comprise an inner surface (140a) and an outer surface (140b), wherein the first coupling tab is configured to be fitted on the inner surface of the side plates, and wherein the second coupling tab is configured to be fitted on the outer surface of the side plates.

5. The battery pack of any one of the preceding claims, wherein at least one of the first or second coupling tab comprises a tapered end portion (122a, 123a);
and/or wherein each of the side plates comprises a guide tab (143) extending toward the second coupling tab;
and/or wherein the side plates and the finishing plate are configured to be connected to each other in an assembling direction and wherein the first and second coupling tabs extend to be substantially parallel to each other in the assembling direction;
and/or wherein the first and second coupling tabs are formed at alternating positions along opposing edges of the finishing plate.

6. The battery pack of any one of the preceding claims, wherein each of the finishing plate and the side plates comprises a position alignment structure configured to substantially align the finishing plate and the side plates with each other.

7. The battery pack of claim 6, wherein the position alignment structure comprises an alignment slot (125) and an alignment pin (145) configured to be inserted into the alignment slot.

8. The battery pack of claim 7, wherein the side plates and the finishing plate are configured to be connected to each other in an assembling direction and wherein the alignment slot extends in the assembling direction.

9. The battery pack of claim 7 or 8, wherein the side plates comprise a guide tab (143) protruding toward the second coupling tab, wherein the guide tab is configured to guide the second coupling tab during coupling of the finishing plate to the side plates, wherein the alignment slot is formed in the second coupling tab, and wherein the alignment pin is formed in the side plates at a position that is substantially aligned with the guide tab in the assembling direction.

## Patentansprüche

1. Batteriepack, umfassend:
eine Mehrzahl von Batteriezellen (10), die in einer ersten Richtung angeordnet sind;
einen Gehäuserahmen (160), der ein offenes Ende umfasst und dazu ausgestaltet ist, die Batteriezellen aufzunehmen, wobei der Gehäuserahmen umfasst: ein Paar länglicher Seitenplatten (140), die beabstandet sind und sich in der ersten Richtung erstrecken, wobei jede der Seitenplatten gegenüberliegende Oberflächen umfasst, und eine Endplatte (150), die mit ersten Enden der Seitenplatten verbunden ist, um gegenüber dem offenen Ende ein geschlossenes Ende auszubilden, wobei die Seitenplatten und die Endplatte einstückig ausgebildet sind; und
eine Abschlussplatte (120), die mit zweiten Enden der Seitenplatten gegenüber den ersten Enden verbunden ist,
**dadurch gekennzeichnet, dass**
an einem ersten Kopplungsstreifen (122), der von der Abschlussplatte hin zu den Seitenplatten vorsteht, ein Haken (121) ausgebildet ist, und
wobei in den Seitenplatten, benachbart zu dem offenen Ende, ein Loch (141) ausgebildet ist, wobei der Haken eine erste und zweite Oberfläche (121a, 121b) umfasst, die sich an einer Spitzenposition treffen, und dazu ausgestaltet ist, in das Loch eingeführt zu werden,
wobei die Abschlussplatte ferner einen zweiten Kopplungsstreifen (123) umfasst, der ein vorderes Ende umfasst und der an einer anderen Position ausgebildet ist als der erste Kopplungsstreifen und hin zu den Seitenplatten vorsteht, und wobei der erste und zweite Kopplungsstreifen dazu ausgestaltet sind, entsprechend an den gegenüberliegenden Oberflächen der Seitenplatten angebracht zu werden, und
wobei das vordere Ende sich weiter von der Abschlussplatte weg erstreckt als die Spitzenposition des Hakens.

2. Batteriepack nach Anspruch 1, wobei die Seitenplatten und die Endplatte durch Biegen einer einzigen Werkstoffplatte ausgebildet sind.

3. Batteriepack nach Anspruch 1, der ferner eine Schutzschicht (121c) umfasst, die auf dem Haken ausgebildet ist, wobei die Schutzschicht aus einem anderen Werkstoff ausgebildet ist als der Haken.

4. Batteriepack nach einem der vorangehenden Ansprüche, wobei die gegenüberliegenden Oberflächen der Seitenplatten eine innere Oberfläche (140a) und eine äußere Oberfläche (140b) umfassen, wobei der erste Kopplungsstreifen dazu ausgestaltet ist, an der inneren Oberfläche der Seitenplatten angebracht zu werden, und wobei der zweite Kopplungsstreifen dazu ausgestaltet ist, an der äußeren Oberfläche der Seitenplatten angebracht zu werden.

5. Batteriepack nach einem der vorangehenden Ansprüche, wobei wenigstens einer des ersten oder zweiten Kopplungsstreifens einen sich verjüngenden Endabschnitt (122a, 123a) umfasst;
und/oder wobei jede der Seitenplatten einen Führungsstreifen (143) umfasst, der sich hin zu dem zweiten Kopplungsstreifen erstreckt;
und/oder wobei die Seitenplatten und die Abschlussplatte dazu ausgestaltet sind, in einer Zusammenbaurichtung miteinander verbunden zu werden, und wobei der erste und zweite Kopplungsstreifen sich so erstrecken, dass sie in der Zusammenbaurichtung im Wesentlichen parallel zueinander sind;
und/oder wobei der erste und zweite Kopplungsstreifen an abwechselnden Positionen entlang gegenüberliegenden Rändern der Abschlussplatte ausgebildet sind.

6. Batteriepack nach einem der vorangehenden Ansprüche, wobei jede der Abschlussplatte und der Seitenplatten eine Positionsausrichtungsstruktur umfasst, die dazu ausgestaltet ist, die Abschlussplatte und die Seitenplatten im Wesentlichen miteinander auszurichten.

7. Batteriepack nach Anspruch 6, wobei die Positionsausrichtungsstruktur einen Ausrichtungsschlitz (125) und einen Ausrichtungsstift (145), der dazu ausgestaltet ist, in den Ausrichtungsschlitz eingeführt zu werden, umfasst.

8. Batteriepack nach Anspruch 7, wobei die Seitenplatten und die Abschlussplatte dazu ausgestaltet sind, in einer Zusammenbaurichtung miteinander verbunden zu werden, und wobei der Ausrichtungsschlitz sich in der Zusammenbaurichtung erstreckt.

9. Batteriepack nach Anspruch 7 oder 8, wobei die Seitenplatten einen Führungsstreifen (143) umfassen, der hin zu dem zweiten Kopplungsstreifen vorsteht, wobei der Führungsstreifen dazu ausgestaltet ist, den zweiten Kopplungsstreifen während eines Koppelns der Abschlussplatte mit den Seitenplatten zu führen, wobei der Ausrichtungsschlitz in dem zweiten Führungsstreifen ausgebildet ist und wobei der Ausrichtungsstift in den Seitenplatten, an einer Position, die in der Zusammenbaurichtung im Wesentlichen mit dem Führungsstreifen ausgerichtet ist, ausgebildet ist.

## Revendications

1. Bloc-batteries comprenant :
une pluralité d'éléments de batterie (10) agencés dans une première direction ;
un bâti de boîtier (160) comprenant une extrémité ouverte et configuré pour recevoir les éléments de batterie, le bâti de boîtier comprenant une paire de plaques latérales allongées (140) espacées et s'étendant dans la première direction, chacune des plaques latérales comprenant des surfaces opposées, et une plaque d'extrémité (150) raccordée aux premières extrémités des plaques latérales afin de former une extrémité fermée opposée à l'extrémité ouverte, dans lequel les plaques latérales et la plaque d'extrémité sont formées d'un seul tenant ; et
une plaque de finition (120) raccordée aux secondes extrémités des plaques latérales opposées aux premières extrémités,
**caractérisé en ce que** :
un crochet (121) est formé sur une première languette de couplage (122) faisant saillie de la plaque de finition vers les plaques latérales, et
dans lequel un trou (141) est formé dans les plaques latérales adjacentes à l'extrémité ouverte, le crochet comprenant des première et seconde surfaces (121a, 121b) qui se rencontrent au niveau d'une position de crête et étant configurées pour être insérées dans le trou,
la plaque de finition comprenant en outre une seconde languette de couplage (123) comprenant une extrémité d'attaque formée dans une position différente de celle de la première languette de couplage et faisant saillie vers les plaques latérales, et les première et seconde languettes de couplage étant configurées pour se monter respectivement sur les surfaces opposées des plaques latérales, et
l'extrémité d'attaque s'étendant plus loin à partir de la plaque de finition que la position de crête du crochet.

2. Bloc-batteries selon la revendication 1, dans lequel les plaques latérales et la plaque d'extrémité sont formées en pliant une seule feuille de matériau.

3. Bloc-batteries selon la revendication 1, comprenant en outre une couche de protection (121c) formée sur le crochet, la couche de protection étant formée avec un matériau différent de celui du crochet.

4. Bloc-batteries selon l'une quelconque des revendications précédentes, dans lequel les surfaces opposées des plaques latérales comprennent une surface interne (140a) et une surface externe (140b), dans lequel la première languette de couplage est configurée pour être montée sur la surface interne des plaques latérales, et dans lequel la seconde languette de couplage est configurée pour être montée sur la surface externe des plaques latérales.

5. Bloc-batteries selon l'une quelconque des revendications précédentes, dans lequel au moins l'une de la première ou de la seconde languette comprend une partie d'extrémité progressivement rétrécie (122a, 123a) ;
et/ou dans lequel chacune des plaques latérales comprend une languette de guidage (143) s'étendant vers la seconde languette de couplage ;
et/ou dans lequel les plaques latérales et la plaque de finition sont configurées pour être raccordées entre elles dans une direction d'assemblage et dans lequel les première et seconde languettes de couplage s'étendent pour être sensiblement parallèles entre elles dans la direction d'assemblage ;
et/ou dans lequel les première et seconde languettes de couplage sont formées dans des positions alternées le long des bords opposés de la plaque de finition.

6. Bloc-batteries selon l'une quelconque des revendications précédentes, dans lequel chacune parmi la plaque de finition et les plaques latérales comprend une structure d'alignement de position configurée pour aligner sensiblement la plaque de finition et les plaques latérales entre elles.

7. Bloc-batteries selon la revendication 6, dans lequel la structure d'alignement de position comprend une fente d'alignement (125) et une broche d'alignement (145) configurée pour être insérée dans la fente d'alignement.

8. Bloc-batteries selon la revendication 7, dans lequel les plaques latérales et la plaque de finition sont configurées pour être raccordées entre elles dans une direction d'assemblage et dans lequel la fente d'alignement s'étend dans la direction d'alignement.

9. Bloc-batteries selon la revendication 7 ou 8, dans lequel les plaques latérales comprennent une languette de guidage (143) faisant saillie vers la seconde languette de couplage, dans lequel la languette de guidage est configurée pour guider la seconde languette de couplage pendant le couplage de la plaque de finition aux plaques latérales, dans lequel la fente d'alignement est formée dans la seconde languette de couplage, et dans lequel la broche d'alignement est formée dans les plaques latérales dans une position qui est sensiblement alignée avec la languette de guidage dans la direction d'assemblage.
